Europäisches Patentamt

European Patent Office

Office européen des brevets

(19)

(11) Veröffentlichungsnummer: **0 229 352**
**B1**

(12) ## EUROPÄISCHE PATENTSCHRIFT

(45) Veröffentlichungstag der Patentschrift:
28.06.89

(51) Int. Cl.⁴: **F01N 3/28, B01J 35/04**

(21) Anmeldenummer: **86117580.0**

(22) Anmeldetag: **17.12.86**

(54) Metallischer Katalysatorkörper mit Wärmestrahlungsschutz.

(30) Priorität: **15.01.86 DE 3601011**

(43) Veröffentlichungstag der Anmeldung:
**22.07.87 Patentblatt 87/30**

(45) Bekanntmachung des Hinweises auf die Patenterteilung:
**28.06.89 Patentblatt 89/26**

(84) Benannte Vertragsstaaten:
**AT BE CH DE ES FR GB GR IT LI LU NL SE**

(56) Entgegenhaltungen:
**GB-A- 1 386 896**
**GB-A- 2 063 092**
**US-A- 3 839 535**
**US-A- 3 938 959**
**US-A- 4 118 196**
**US-A- 4 265 332**

(73) Patentinhaber: **INTERATOM Gesellschaft mit beschränkter Haftung, Friedrich-Ebert-Strasse, D-5060 Bergisch-Gladbach 1(DE)**

(72) Erfinder: **Maus, Wolfgang, Dipl.-Ing., Gut Horst, D-5060 Bergisch Gladbach 1(DE)**

(74) Vertreter: **Mehl, Ernst, Dipl.-Ing. et al, Postfach 22 13 17, D-8000 München 22(DE)**

# Beschreibung

Die vorliegende Erfindung betrifft einen metallischen Katalysatorkörper gem. dem Oberbegriff des Anspruchs eins. Solche Katalysatorkörper sind beispielsweise aus der EP-B 0 049 489 bekannt. Solche Katalysatorkörper haben eine für ihre Funktion besonders positive Eigenschaft, nämlich eine gegenüber keramischen Wabenkörpern gute Wärmeleitfähigkeit ihrer Struktur. Da sie außerdem mechanisch sehr widerstandsfähig sind, brauchen sie auch bei der Verwendung an Kraftfahrzeugen nicht in einer besonderen Polsterung angeordnet zu werden.

Diese grundsätzlichen Vorteile führen jedoch dazu, daß bei bestimmten Betriebszuständen das Mantelrohr eines solchen Katalysatorkörpers sehr heiß werden kann und dann Wärme in Form von Wärmestrahlung abgibt. Bei einer Anordnung unter der Bodenwanne eines Kraftfahrzeuges kann ein Wärmeübertrag durch Wärmestrahlung auf benachbarte Teile unerwünscht sein.

Aus der GB-A 1 386 896 ist ein metallischer Katalysatorkörper bekannt, der durch eine strukturierte Metallschicht thermisch von seinem Mantelrohr isoliert ist. Die Isolierschicht hat allerdings eine andere Struktur als der Wabenkörper selbst und befindet sich innerhalb des Mantelrohres. Dadurch wird die Temperatur des Mantelrohres im Betrieb zwar abgesenkt, die Wärmestrahlung des Mantelrohres nach außen dann aber nicht mehr verhindert. Außerdem führt die Absenkung der Temperatur des Mantelrohres zu unterschiedlichen thermischen Dehnungen von Mantelrohr und Wabenstruktur, die im Inneren des Körpers schwer zu beherrschen sind.

Aufgabe der vorliegenden Erfindung ist daher die Reduzierung der Wärmestrahlung eines metallischen Katalysatorkörpers.

Zur Lösung dieser Aufgabe wird gem. dem Anspruch eins vorgeschlagen, daß auch außerhalb des Mantelrohres noch eine oder mehrere Lagen der sonst das Innere des Katalysatorkörpers bildenden Wabenstruktur als Wärmestrahlungsschutz angeordnet sind. Statt einer bei der Fertigung und Montage aufwendigen Schutzschicht, beispielsweise aus keramischem Fasermaterial oder dergleichen,wird erfindungsgemäß lediglich außerhalb des Mantelrohres nochmals eine wabenförmige metallische Struktur angeordnet. Der übliche Aufbau eines Katalysatorsystems sieht vor, daß das Mantelrohr des Katalysatorkörpers an seinen Enden mit Übergangsstücken verschweißt oder anderweitig verbunden und in das Abgassystem eines Kraftfahrzeuges eingesetzt wird. Die als Wärmestrahlungsschutz dienende Wabenstruktur wird somit nicht von Abgas durchströmt und es finden dort auch keine exothermen Reaktionen statt, unabhängig davon, ob diese äußere Wabenstruktur mit katalytisch wirksamen Material beschichtet ist oder nicht. Die Wabenstruktur außerhalb des Mantelrohres bildet wegen ihres mehrschichtigen Aufbaus einen sehr wirksamen Schutz gegen die Wärmestrahlung des Mantelrohres.

In weiterer Ausgestaltung der Erfindung wird in Anspruch zwei vorgeschlagen, daß die Wabenstruktur aus abwechselnden Lagen glatter und gewellter Bleche besteht, und daß außerhalb des Mantelrohres noch eine bis fünf, vorzugsweise zwei, Schichten aus je einem glatten und einem gewellten Blech angeordnet sind. Es ist bekannt, Katalysatorkörper aus geschichteten oder spiralig aufgewickelten glatten und gewellten Blechen herzustellen und in einem Mantelrohr anzuordnen. Durch Hinzufügen einiger äußerer Schichten als Wärmestrahlungsschutz wird der Herstellungsprozeß nur wenig verändert und es können die ohnehin vorhandenen Materialien benutzt werden.

In spezieller Ausgestaltung der Erfindung wird vorgeschlagen, daß die Wabenstrukturen außerhalb des Mantelrohres mit diesem und untereinander fügetechnisch verbunden sind, vorzugsweise verlötet. Durch die Anbringung einer zusätzlichen Schicht als Wärmestrahlungsschutz ist kein zusätzlicher fügetechnischer Schritt erforderlich, da die äußeren und die inneren Schichten in einem Arbeitsgang, z. B. in einem Lötofen, miteinander verlötet werden können.

Weiterhin wird in Anspruch vier vorgeschlagen, daß die durch die als Wärmestrahlungsschutz dienende äußere Wabenstruktur gebildeten Kanäle von Umgebungsluft durchströmbar sein sollen. Bei der Anordnung eines erfindungsgemäßen Katalysatorkörpers unter einem Kraftfahrzeug ist dies zwanglos möglich, sofern der Katalysatorkörper so angeordnet ist, daß die Kanäle etwa in Fahrtrichtung des Fahrzeuges verlaufen. In diesem Falle wird die äußere Wabenstruktur gekühlt, was die Abgabe von Wärmestrahlung noch weiter verringert.

Weitere spezielle Ausgestaltungen sind in den Ansprüchen fünf bis sieben angegeben.

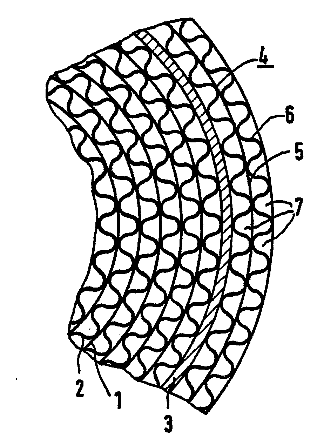

Ein Ausführungsbeispiel der Erfindung ist in schematischer Darstellung in der Zeichnung dargestellt. Die Figur zeigt einen Ausschnitt aus einem Querschnitt durch einen erfindungsgemäßen metallischen Katalysatorkörper mit Wärmestrahlungsschutz. Der Katalysatorkörper selbst ist aus abwechselnden Lagen glatter 1 und gewellter 2 hochtemperaturfester Stahlbleche spiralig aufgewickelt. Ein Mantelrohr 3 umgibt den katalytisch wirkenden Teil des Katalysatorkörpers. Zumindest die Bleche 1, 2 im Inneren des Mantelrohres 3 sind mit einem katalytisch wirkenden Material beschichtbar oder beschichtet. Außerhalb des Mantelrohres 3 sind weitere Lagen glatter 5 und gewellter 6 Bleche angeordnet, wodurch von der Umgebungsluft durchströmbare Kanäle 7 entstehen. Grundsätzlich kann für die äußere und die innere Wabenstruktur gleichartiges Material verwendet werden, jedoch ist es auch möglich beim Wärmestrahlungsschutz billigere Materialien zu verwenden, da dort extreme Temperaturen und Belastungen durch Korrosion oder Erosion nicht auftreten. Es hängt ferner vom Einzelfall ab, wieviele Lagen der Wabenstruktur für einen wirksamen Wärmestrahlungsschutz benötigt werden. Auch kann man je nach den Anforderungen die äußere Lage aus einer glatten oder einer gewellten Schicht bilden.

Die erfindungsgemäße Ausführung hat eine weitere vorteilhafte Auswirkung, sofern die Außenisolierung nur als Wärmestrahlungsschutz und nicht als Kühlung ausgebildet ist. In diesem Falle nimmt das Mantelrohr beim Betrieb eine höhere Temperatur an als ohne Wärmestrahlungsschutz. Die Temperaturdifferenz zwischen dem Inneren des Katalysatorkörpers und dem Mantelrohr wird damit geringer als ohne Wärmestrahlungsschutz, was gleichzeitig eine geringere thermische Wechselbelastung der ganzen Wabenstruktur bewirkt. Ein Wärmestrahlungsschutz im Inneren des Mantelrohres hingegen, wie er aus dem Stand der Technik bekannt ist, würde die Temperaturdifferenz und damit die thermischen Wechselbelastungen erhöhen. Wie schon erwähnt, ist Voraussetzung für diesen Effekt, daß die äußeren Lagen nicht als Kühlrippen wirken und daher nicht von Umgebungsluft durchströmt werden, sondern nur als Wärmestrahlungsschutz dienen. Ein Verschließen der außerhalb des Mantels angeordneten Kanäle, beispielsweise durch Quetschungen an den Enden, einem Schutzkragen oder dergleichen, ist hierfür erforderlich.

Demgemäß kann die erfindungsgemäße Ausführung eines metallischen Katalysatorkörpers zur Herabsetzung der thermischen Wechselbelastungen in seinem Inneren und zur Verminderung der Außentemperatur dienen. Ein Einbau unter der Bodenwanne eines Kraftfahrzeuges unter Vermeidung von hohen Temperaturen an benachbarten Teilen wird dadurch erleichtert.

**Patentansprüche**

1. Metallischer Katalysatorkörper, insbesondere für Verbrennungskraftmaschinen, wobei der Katalysatorkörper eine aus Blechlagen bestehende, metallische Wabenstruktur (1, 2) und ein Mantelrohr (3) aufweist, dadurch gekennzeichnet, daß außerhalb des Mantelrohres (3) noch eine oder mehrere der auch die Wabenstruktur (1, 2) bildenden Blechlagen als Wärmestrahlungsschutz (5, 6) angeordnet sind.

2. Katalysatorkörper nach Anspruch 1, dadurch gekennzeichnet, daß die Wabenstruktur aus abwechselnden Lagen glatter (1) und gewellter (2) Bleche besteht und daß außerhalb des Mantelrohres (3) eine bis fünf, vorzugsweise zwei Schichten aus je einem glatten(5) und einem gewellten (6) Blech angeordnet sind.

3. Katalysatorkörper nach Anspruch 1 oder 2, dadurch gekennzeichnet, daß die Wabenstrukturen (1, 2, 5, 6) außerhalb und innerhalb des Mantelrohres (3) mit diesem und untereinander fügetechnisch verbunden sind, vorzugsweise verlötet.

4. Katalysatorkörper nach Anspruch 1, 2 oder 3, dadurch gekennzeichnet, daß Kanäle (7) der äußeren als Wärmestrahlungsschutz dienenden Wabenstruktur (5, 6) von Umgebungsluft durchströmbar sind.

5. Katalysatorkörper nach einem der vorhergehenden Ansprüche, dadurch gekennzeichnet, daß der Wärmestrahlungsschutz in Umfangsrichtung nur einen Teil des Katalysatorkörpers umgibt, vorzugsweise den nach Einbau oben liegenden Bereich.

6. Katalysatorkörper nach Anspruch 2, 3, 4, 5, dadurch gekennzeichnet, daß die äußere Lage durch ein glattes Blech (5) gebildet wird.

7. Katalysatorkörper nach Anspruch 2, 3, 4, 5, dadurch gekennzeichnet, daß die äußere Lage durch ein gewelltes Blech (6) gebildet wird.

**Claims**

1. Metallic catalyst body, particularly for internal combustion engines, wherein the catalyst body has a metallic honeycomb structure (1, 2), which consists of metal sheet layers, and a jacket tube (3), characterised in that one or more of the metal sheet layers which also form the honeycomb structure (1, 2) are in addition arranged outside the jacket tube (3) as heat radiation protection (5, 6).

2. Catalyst body according to claim 1, characterised in that the honeycomb structure consists of alternating layers of smooth (1) and corrugated (2) metal sheets and in that one to five, preferably two, layers of respectively one smooth (5) and one corrugated (6) metal sheet are arranged outside the jacket tube (3).

3. Catalyst body according to claim 1 or 2, characterised in that the honeycomb structures (1, 2, 5, 6) outside and inside the jacket tube (3) are connected, preferably brazed, with the latter and with each other by joining techniques.

4. Catalyst body according to claim 1, 2 or 3, characterised in that ambient air can flow through channels (7) of the outer honeycomb structure (5, 6) which is serving as heat radiation protection.

5. Catalyst body according to one of the preceding claims, characterised in that the heat radiation protection in the peripheral direction only surrounds a part of the catalyst body, preferably the area lying at the top after installation.

6. Catalyst body according to claim 2, 3, 4, 5, characterised in that the outer layer is formed by a smooth metal sheet (5).

7. Catalyst body according to claim 2, 3, 4, 5, characterised in that the outer layer is formed by a corrugated metal sheet (6).

**Revendications**

1. Support métallique de catalyseur, notamment pour des machines à combustion interne, dans lequel le support de catalyseur comporte une structure métallique en nid d'abeilles (1, 2) constituée de couches de tôles et un tube enveloppe (3), caractérisé en ce qu'à l'extérieur du tube enveloppe (3), sont disposées en outre une ou plusieurs couches de tôles formant également la structure en nid d'abeilles (1, 2) et servant de protection vis-à-vis du rayonnement thermique (5, 6).

2. Support de catalyseur suivant la revendication 1, caractérisé en ce que la structure en nid d'abeilles est constituée de couches alternées de tôles planes (1) et ondulées (2) et en ce qu'à l'extérieur du tube enveloppe (3) sont disposées de une à cinq et de préférence deux couches constituées chacune d'une tôle plane (5) et d'une tôle ondulée (6).

3. Support de catalyseur suivant la revendication 1 ou 2, caractérisé en ce que des structures en nid d'abeilles (1, 2, 5, 6) à l'extérieur et à l'intérieur du tube enveloppe (3) sont reliées à celui-ci et entre elles par une technique de jointoiement et de préférence sont soudées.

4. Support de catalyseur suivant la revendication 1, 2 ou 3, caractérisé en ce que des canaux (7) de la structure en nid d'abeilles (5, 6) extérieure servant de protection vis-à-vis du rayonnement thermique peuvent être parcourus par l'air ambiant.

5. Support de catalyseur suivant l'une des revendications précédentes, caractérisé en ce que la protection vis-à-vis du rayonnement thermique n'entoure, dans la direction périphérique, qu'une partie du support de catalyseur, de préférence la région se trouvant vers le haut après le montage.

6. Support de catalyseur suivant la revendication 2, 3, 4, 5, caractérisé en ce que la couche extérieure est constituée d'une tôle plane (5).

7. Support de catalyseur suivant la revendication 2, 3, 4, 5, caractérisé en ce que la couche extérieure est constituée d'une tôle ondulée (6).